# EUROPEAN PATENT SPECIFICATION

(11) **EP 2 067 301 B1**
(45) Date of publication and mention of the grant of the patent: **08.07.2015**
(21) Application number: 07788294.2
(22) Date of filing: 07.08.2007
(51) Int. Cl.: H04L 12/18

(54) **METHOD AND NETWORK ENTITIES FOR SYNCHRONIZING RADIO COMMUNICATION**
VERFAHREN UND NETZWERKENTITÄTEN ZUM SYNCHRONISIEREN DER FUNKKOMMUNIKATION
PROCÉDÉ ET ENTITÉS DE RÉSEAU POUR LA SYNCHRONISATION DE RADIOCOMMUNICATIONS

(30) Priority: 24.08.2006 EP 06017660
(43) Date of publication of application: 10.06.2009
(73) Proprietor: Nokia Solutions and Networks GmbH & Co. KG, 81541 Munich (DE)
(72) Inventor: BREUER, Volker, 16727 Bötzow (DE); MARTOS-RIANO, Demian, 10115 Berlin (DE); ULRICH, Thomas, 67098 Bad Dürkheim (DE)
(74) Representative: Weidel, Gottfried
(86) International application number: PCT/EP2007/058196
(87) International publication number: WO 2008/022915

(56) References cited:
- EP-A- 1 298 836
- WO-A-2007/102060
- GB-A- 2 406 462
- US-A1- 2002 136 201
- US-B1- 6 738 981

## Description

The present invention relates to a method and network entities, e.g. a radio network node like a base station or a network controller and mobile stations, for radio communication, wherein at least one mobile station receives information from at least one first radio network node serving radio cells providing multicast communication and communicates with at least one second radio network node serving radio cells providing unicast communication.

### BACKROUND OF INVENTION

This invention is particularly used in the field of mobile radio communications, preferably for their future evolution.

EP1298836A1 discloses a method of and an apparatus for providing an Internet Protocol multicast service, wherein multicast data is transmitted through multicast routers to user stations over a digital broadcast channel (especially DVB-T) together with digital broadcast signals, at least if a request has been received from a user station for the multicast data. The transmission of the multicast data by a multicast router is conditional upon the reception of a request for said multicast data from that multicast router by a plurality of the user stations.

For the evolved Packet Core and the evolved UTRAN being currently discussed in standardization activities like 3GPP (Third Generation Partnership Project). So-called MBMS (Multimedia Broadcast Multicast Services) is seen as a key feature of the future mobile/cellular communications system. Multimedia Broadcast Multicast Service (MBMS) is a broadcasting service that can be offered via existing GSM and UMTS cellular networks. The infrastructure offers an option to use an uplink channel for interaction between the service and the user, which is not a straightforward issue in usual broadcast networks, as for example conventional digital television is only a one-way (unidirectional) system. MBMS uses multicast distribution in the core network instead of point-to-point links for each end (user) device.

In addition, in eUTRAN (i.e. LTE) MBMS shall be offered enabling soft or selective combining at the UE, in order to improve the efficiency at the cell border. This requires high downlink synchronization accuracy. The same MBMS service broadcasted from different nodes is synchronised with a high accuracy, suited for macro diversity combining in the UEs. In OFDM systems, UE manufacturers postulate a synchronisation accuracy of no less than the Cyclic Prefix of the OFDM symbol; in this way a UE in the field will be able to perform soft combining of the data streams provided by different NodeBs. If in addition a spectrum chunk of carrier is in use for MBMS and not used for any unicast service, all received signals can be constructively combined, given that DL transmissions from different NodeBs are bit-identically encoded. Therefore, provisioning of the MBMS service in DL is coverage limited only, according to the reach of the radio signals and the possibility to combine several from different sources, and not interference limited as it is the case in DL for unicast services. This is in opposite to UMTS where the DL is in general interference or (capacity limited) due to the nature of CDMA being a compound of a code stack.

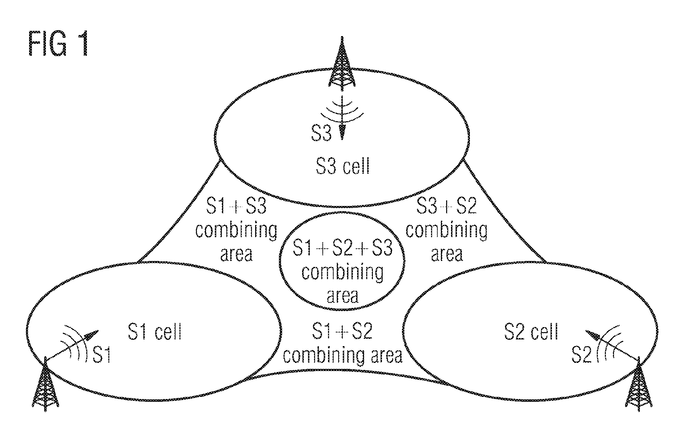

For instant, Fig. 1 shows a soft or selective combining at the UE (described as combining areas e.g. S1+S3, S3+S2, S1+S2, S1+S2+S3) of two or three identical signals S1, S2, S3 from different eNBs serving radio cells S1 cell, S2 cell and S3 cell within a mobile radio communications network.

Due to the high available BS power and support of selective or soft combining at the UE, the MBMS coverage area of a network node, e.g. BS/NodeB, can be far larger than its normal coverage area for unicast services as shown in Fig. 1.

For this reason, MBMS services will be preferably offered over a Single Frequency Layer (SFL) in the network, used in DL from a reduced number of base stations with high transmission power capacity.

For example, in order to offer mobile TV over MBMS, the following scenario can be expected: coverage-driven rollout of mobile TV over a large geographical area (entire city, region, or even country), using a single LTE frequency chunk/band; few Node Bs, in comparison with the total amount of deployed Node Bs, would be required to broadcast the service (coverage limited and not interference limited in the DL); the UL channel for the UEs shall anyway be ensured in its own cell, a cell not necessarily assigned to the Node B offering the MBMS service). The bigger the broadcasted area, the higher the probability that the number of interested (mobile TV watching) customers is sufficiently high and justifies the use of PtM (Point to Multipoint) broadcasting.

However, the problem of the feedback from the UE to the system in the UL and its lower reach, due to lower UE power shall be solved.

In this context some relevant mechanisms should be introduced which involves
- Communication between eNBs (evolved-Node Bs) in eUTRAN for MBMS purposes and related definition of interfaces between eNBs.
- Decision mechanisms at eNBs in order to provide MBMS in an efficient way, in terms of appropriate coverage and use of radio resources.
- Coordination of radio resources between evolved Node Bs for MBMS purposes.

Use of the presented invention is not restricted to MBMS over UTRAN. Broadcast and Multicast Services may be delivered over other existing technologies which are not necessarily related to mobile communications, such as DAB DMB (T-DMB is an ETSI standard, DVB: DVB-T and especially DVB-H for Handhelds).

In UTRAN, these mechanisms, which are especially relevant for Multicast, are coordinated at the RNC. This approach is not applicable in eUTRAN because there is/will not be any central node in the network anymore.

In eUTRAN, it is possible to have a very similar approach as in UTRAN if selected eNBs (preferably, MBMS capable ones) are treated as central MBMS nodes and assume RNC-like MBMS functions.

It is relevant to analyze how the uplink channel from the UE to the MBMS system is meant to be provided in e.g DVB-H. Using a mobile communications network is already a common approach for this purpose, however the relation between radio cells of one system and the other may have not been taken into account.

### SUMMARY OF INVENTION

It is therefore an object of the invention to improve the above mentioned MBMS delivery approach.

This object is solved by features mentioned in the independent claims. Preferred embodiments of the invention are disclosed in the dependent claims.

An aspect of the invention is that in a mobile radio communications network, where at least one mobile station receives information from at least one first radio network node serving radio cells providing multicast communication and communicates with at least one second radio network node serving radio cells providing unicast communication, information regarding multicast communication is transmitted from the at least one mobile station to the at least one second radio network node and the at least one first radio network node via at least one connection established between said first and said second network node, wherein the mobile radio communications network is structured by multiple radio cell layers served by at least one radio network and said at least one connection being established in any one of said radio cell layers is supported by radio resources of any other radio cell layer.

Preferably said multicast communication provides multimedia broadcast multicast services.

Above all this brings about the advantage that broadband- and multicast services, in particular data-intensive services like MBMS, could be efficiently provided for a great deal of user equipments. This would make DL as well as UL communication available in an economic manner.

According to a further embodiment of the invention said information regarding multicast communication further comprises paging information and/or user counting information and/or multicast service indication.

Preferably the at least one connection is supported by radio resources from at least one neighbouring radio cell providing unicast communication and/or providing multicast communication.

It is further advantageous if said radio resources from at least one neighbouring radio cell are chosen towards which said mobile station is moving.

The presented invention can be applied in order to provide an uplink from the UE to the MBMS system over the mobile network.

Preferably the MBMS content will be provided by MBMS cells where as counting and MBMS service indication will be a task fulfilled by NodeBs being in a lower layer structure to overcome the limited feedback possibilities of the UE and the need to listen for service indication to separate reserved MBMS frequency or data chunks.

The invention also relates to network entities, e.g. a radio network node like a base station and a mobile station, comprising means for radio communication and for performing the above mentioned inventive method.

A second radio network node performing the above mentioned method, comprises means for receiving information regarding multicast communication from the at least one mobile station and means for forwarding the information to the at least one first radio network node via at least one connection established between them.

A first radio network node performing the above mentioned method, comprises means for receiving information regarding multicast communication from the at least one second radio network node via at least one connection established between them.

A mobile station performing the above mentioned method comprises means for transmitting information regarding multicast communication to the at least one second radio network node and to the at least one first radio network node via at least one connection established between said first and said second radio network node.

A radio communications network comprising at least one said radio network node and at least one said mobile station.

### BRIEF DESCRIPTION OF THE DRAWINGS

Preferred embodiments of the present invention will now be described with reference to the accompanying drawing in which:
Fig. 1 illustrates a schematic diagram as afore described,
Fig. 2 shows a schematic diagram depicting a MBMS coverage area versus a unicast (voice) coverage area,
Fig. 3 shows a schematic structure of a three-layered, hierarchical cell ordering with increasing cell sizes.

### DETAILLED DESCRIPTION OF THE DRAWINGS

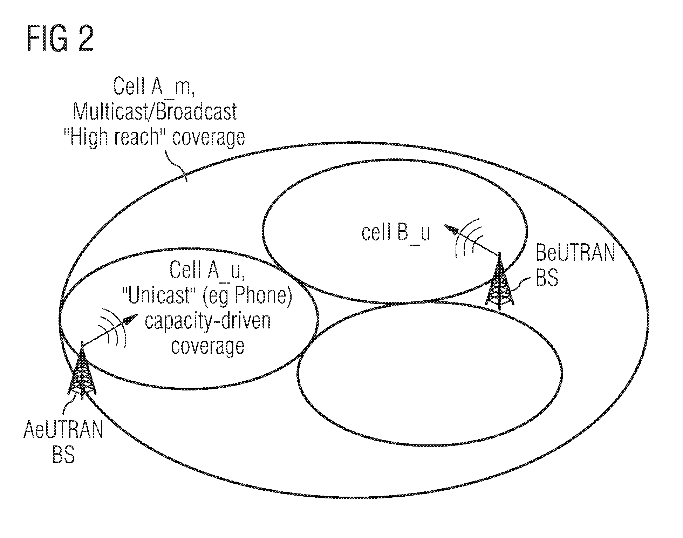

Fig. 2 generally shows an eUTRAN Base station A serving radio cells Cell A_m (MBMS coverage) and Cell A_u (Unicast coverage). It is illustrated a further eUTRAN Base station B serving Cell B_u (Unicast coverage). Additionally a further cell is shown with no special allocation to any of the depicted elements.

The illustrated MBMS coverage area from A overlaps Cell A_u as well as Cell B_u.

In contrast with UTRAN, where there is a RAN central node, the RNC, in eUTRAN there is no central node, whether for user plane or control purposes. Any activity like MBMS requiring coordination between several base stations requires signalling between them. Below we outline a coordination strategy fulfilling the purposes of MBMS.

For most of the mobile services, the network roll-out is capacity-driven and consists of small cells building a dense coverage. This is an interesting contrast with the MBMS roll-out, coverage-driven, or very large cells.

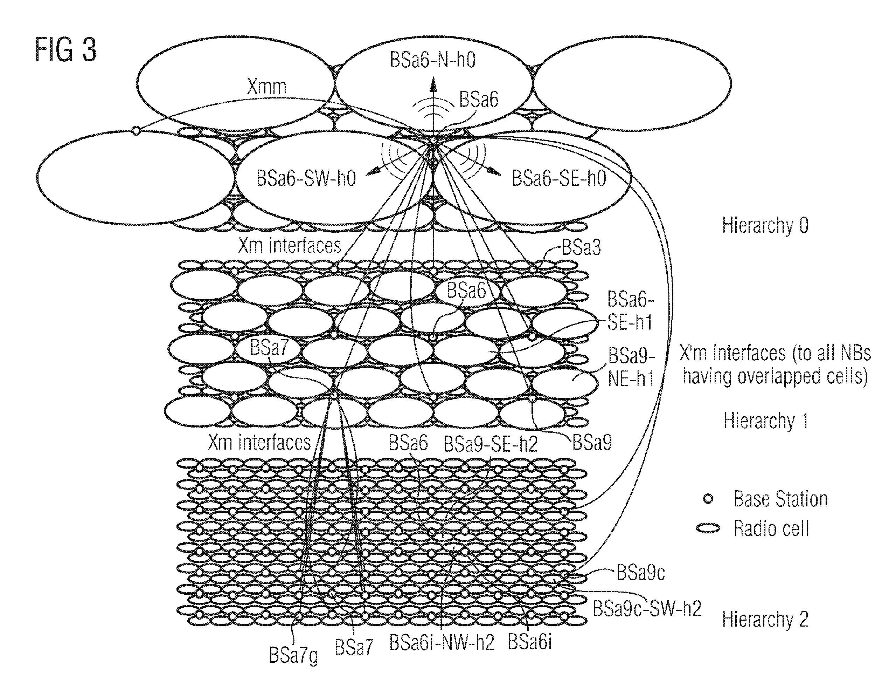

Considering the base stations and their provided cells in a network, for the purpose of MBMS, a hierarchical cell organization is configured as represented in Fig. 3.

Fig. 3 generally depicts MBMS Hierarchical Cell Ordering.

It is shown three hierarchical cell layers Hierarchy 0, Hierarchy 1 and Hierarchy 2 with radio cells having different sizes depending on their associated hierarchical layer. A Base station e.g. BSa6 could serve several radio cells of various hierarchical layers. The radio cells of the layers are marked with signs, particularly as described below. Furthermore some so-called X-interfaces e.g. Xmm, Xm X'm among at least two base stations are depicted.

The hierarchical cell organization is established according to the "topographically" overlapping conditions between cells of different sizes. A proper radio network planning and configuration (or self-configuration) (addressing MBMS services should address complete overlapping of one cell by another of a higher hierarchical level. This is a subordinating relationship that will be called "MBMS Cell Subordination" of the cell of lower hierarchy (and smaller size) to the cell of higher hierarchy (and bigger size). This relation is inherited over the hierarchy line. As an example, in Fig. 3, the cell *BSa9c- SW -h2* is overlapped by *BSa9-NE-h1*, which in turn is overlapped by *Bsa6- SE - h0* (*h0* denotes the highest hierarchy, and in the described example *h1* is an intermediate hierarchy while h2 is the lowest hierarchy). *BSa9c- SW -h2* is subordinated to both *BSa9c- NE -h1* and *Bsa6-SE - h0,* while *BSa9c- NE -h1* is subordinated to *BSa9c- NE -* h2. These relations are static ones, established at the time of the cell configuration (or self-configuration) of the network, or else detected (and optimized) automatically. MBMS relies then on an ordered hierarchical cell structure, or HCO (Hierarchical Cell Ordering).

For multicast purposes, and according to the presence of interested recipients in the different lowest-hierarchical cell area, the decisions regarding how to reach them in a way that is the most efficient in terms of radio efficiency are various:
- MBMS over a combination of cells of different hierarchies.
- MBMS over a scattered group of cells of the same hierarchy, with special attention to those cases where the UE is at cell border.
- MBMS over cells of the same hierarchy forming a convex area.

For example, a broadcast service meant for a given geographical area would be offered from the highest hierarchy, selecting cells covering the intended area. In terms of radio network configuration (or self-configuration), the MBMS coverage shall coincide with the intended geographical area

The decision is taken according to the information available and retrievable about the interested recipients. The information serves the purposes of
- Counting interested recipients per cell, with special attention of those close to the edge of the cell.
- Enabling Soft or selective combining for specific UEs, using MBMS activation at several cells simultaneously.
- Checking additional reception information (e.g. actual interest in immediate reception).

For broadcast purposes, according to the targeted local MBMS Broadcast service area / Local Broadcast Area, it is not necessary to perform any localization of the interested users, and the transmission takes place at MBMS cells preselected according to the service and related broadcast areas. However, coordination is still required for proper Radio Resources reservation for the purpose of the broadcast, according to the existing HCO.

The UL link of the UE, which will serve for information exchange purposes with RAN, shall be established over the best cell which is the serving cell or the cell the UE is located and is in general the smallest cell providing coverage (i.e. belongs to the lowest hierarchy level), and acts as what we call an UL-relay cell.

In LTE, there is no centralized node like in UTRAN and this information needs to be exchanged between Node Bs in a fashion that reflects the described subordination. For this purpose, following interfaces can be defined at this stage:
- Xmm, which interconnects two eNBs belonging to the same hierarchy level that share a border area.
- Interface X'm_i (where i is an integer) between eNBs, an eNB "1" that manages a lower hierarchy cell with respect to a higher hierarchy cell, and the eNB "h" which manages the mentioned higher hierarchy cell. i is the hierarchy level degree difference between the cells.
- Xm, which is equivalent to X'm_1.

The Xmm interface interconnects eNBs with cells sharing a border. Since MBMS in LTE requires accurate synchronization between this kind of cells, this interface makes primarily sense for those eNBs that are MBMS-capable. This interface serves the purpose of coordinated (in particular with respect to Soft Handover) MBMS. This involves coordination of MBMS content broadcast/multicast according to time and frequency radio resources, using the established synchronization. In addition, this interface could serve MBMS-specific mobility management mechanisms.

For a given eNB that manages a higher hierarchy cell *c_h,* the X'm_i interfaces connect to him in a star fashion all eNBs managing those cells hierarchically subordinated to *c_h.* The interface Xm interconnects eNBs in a tree reflecting the hierarchical relationship between cells.

The X'm_i interface serves the purpose of:
1. Providing information "hierarchy upwards" on UEs interested in a certain MBMS, for counting & other purposes.
2. Indicating decision "hierarchy downwards" on accepting/refusing to take over MBMS towards interested UEs in the affected cells.

It is relevant to indicate that this is affecting lower-hierarchy cells that are not serving any interested UE, but shall lend radio resources for the higher-level hierarchy cell's MBMS.

Information is provided "hierarchy upwards" with i=1, also as a mean to consolidate the information that is relevant for a decision.

Decision is provided "hierarchy downwards" with i=1, however indicating to the lowest hierarchy level cell which eNB takes over the MBMS delivery.

The decision of accepting to take over MBMS towards UEs in a lower-hierarchy cell has also an associated RRM (=Radio Resource Management) configuration (or self-configuration) between both cells with respect to the radio resources necessary for the MBMS. This RRM configuration (or self-configuration) is based in sharing the "resources for disposition". Two approaches are possible:
- The resources are owned by the lowest hierarchy level cell, and these are lent to the higher-hierarchy cell that has accepted to take over the MBMS for the interested UEs, and returned upon MBMS Session completion.
- The other way round: resources are owned by the higher hierarchy cell, and in case lower-hierarchy cells broadcast MBMS, RRM resources are lent, and returned upon MBMS Session completion.

Both approaches seem to be justified for different, equally relevant RRM strategies.

### Additional improvements

A) In order to improve coverage and mobility conditions, when a lower-hierarchy cell informs on the presence of interested UEs at it, then the higher level hierarchy cell shall also take into consideration providing MBMS at neighbouring cells. This implies that mechanisms are provided in order to:
   - Inform lower-hierarchy cells, which MBMS services will be offered in their area.
   - Proceed to necessary RRM allocation as described previously.
   - Inform neighbouring lower-hierarchy cells, which MBMS services are potentially offered.
B) The decision on how to offer an MBMS is based on the position of the UEs at a given point in time. Since UEs move, the situation changes and the old decision may become obsolete. The update of this information can be based on following strategies:
   - The UL-relay cell at which the lowest-hierarchy level is, notices relevant changes regarding the UE, and informs "hierarchy, upwards".
   - The serving MBMS eNB may request from lowest-hierarchy cells an update on the situation. This is performed not only towards UP-relay cells of UE being serviced, but from lower-hierarchy cells in general to which interested cells may have moved in or turned on.

## Claims

1. A method for radio communication within a mobile radio communications network comprising:
receiving, by at least one mobile station information from at least one first radio network node (BSa6) serving radio cells (Bsa6-N-h0, Bsa6-SW-h0, Bsa6-SE-h0) providing multicast communication; and
communicating, by the at least one mobile station with at least one second radio network node (Bsa9) serving radio cells (Bsa9-NE-h1) providing unicast communication; and
transmitting information regarding multicast communication from the at least one mobile station to the at least one second radio network node and the at least one first radio network node via at least one connection established between said first and said second radio network node, and
wherein the mobile radio communications network is structured by multiple radio cell layers served by at least one radio network node (BSa6, Bsa9, Bsa7) and said at least one connection being established in any one of said radio cell layers is supported by radio resources of any other radio cell layer.

2. A method as claimed in claim 1, wherein multicast communication provides multimedia broadcast multicast

3. A method as claimed in claim 1 or 2, wherein said information regarding multicast communication further comprises paging information and/or user counting information and/or multicast service indication.

4. A method as claimed in any of the claims 1 to 3, wherein the at least one connection is supported by radio resources from at least one neighbouring radio cell providing unicast communication and/or providing multicast communication.

5. A method as claimed in claim 4, wherein said radio resources from at least one neighbouring radio cell are chosen towards which said mobile station is moving.

6. A second radio network node (BSa9) for radio communication within a mobile radio communication network comprising at least one mobile station receiving information from at least one first radio network node (BSa6) serving radio cells (Bsa6-N-h0, Bsa6-SW-h0, Bsa6-SE-h0) providing multicast communication comprising
means for receiving information regarding multicast communication from the at least one mobile station; and
means for forwarding the information to the at least one first radio network node (Bsa6) via at least one connection established between them, wherein the mobile radio communications network is structured by multiple radio cell layers served by at least one radio network node (BSa6, Bsa9, Bsa7) and said at least one connection being established in any one of said radio cell layers is supported by radio resources of any other radio cell layer.

7. A first radio network node (BSa6) for radio communication within a mobile radio communication network comprising at least one mobile station and at least one second radio network node (BSa9) serving radio cells (Bsa9-NE-h1) providing unicast communication comprising
means for receiving information regarding multicast communication from the at least one second radio network node (Bsa9) via at least one connection established between them, wherein the mobile radio communications network is structured by multiple radio cell layers served by at least one radio network node (BSa6, Bsa9, Bsa7) and said at least one connection being established in any one of said radio cell layers is supported by radio resources of any other radio cell layer.

8. The first radio network node as claimed in claim 7 or the second radio network node as claimed in claim 6, wherein multicast communication provides multimedia broadcast multicast services.

9. The first radio network node as claimed in claim 7 or 8, or the second radio network node as claimed in claim 6 or 8, wherein said information regarding multicast communication further comprises paging information and/or user counting information and/or multicast service indication.

10. The first radio network node as claimed in any of the claims 7 to 9, or the second radio network node as claimed in any of the claims 6, 8 or 9, wherein the at least one connection is supported by radio resources from at least one neighbouring radio cell providing unicast communication and/or providing multicast communication.

11. The first or second radio network node as claimed in claim 10, wherein said radio resources from the at least one neighbouring radio cell are chosen towards which a mobile station is moving.

12. The method as claimed in any of claims 1 to 5, or the first radio network node as claimed in any of the claims 7 to 11, or the second radio network node as claimed in any of the claims 6 or 8 to 11, wherein the claimed invention is for synchronizing radio communication within a mobile radio communication network.

13. The first radio network node as claimed in any of the claims 7 to 12, or the second radio network node as claimed in any of the claims 6 or 8 to 12, wherein the first and/or the second radio network node comprises a base station or a NodeB.

14. A radio communications network comprising at least one second radio network node according to any of the claims 6 or 8 to 13 and at least one first radio network node according to any of the claims 7 to 13.

## Patentansprüche

1. Verfahren zur Funkkommunikation innerhalb eines Mobilfunk-Kommunikationsnetzwerks, aufweisend:
Empfangen, durch mindestens eine Mobilstation von Information von mindestens einem ersten Funknetzwerk-Knoten (BSa6), der Funkzellen (BSa6-N-h0, BSa6-SW-h0, BSa6-SE-h0) bedient, die Multicast-Kommunikation bereitstellen; und
Kommunizieren, über die mindestens eine Mobilstation, mit mindestens einem zweiten Funknetzwerk-Knoten (BSa9), der Funkzellen (BSa9-NE-h1) bedient, die Unicast-Kommunikation bereitstellen; und
Übertragen von Information betreffend Multicast-Kommunikation von der mindestens einen Mobilstation an den mindestens einen zweiten Funknetzwerk-Knoten und den mindestens einen ersten Funknetzwerk-Knoten über mindestens eine zwischen dem ersten und dem zweiten Funknetzwerk-Knoten eingerichtete Verbindung, und
wobei das Mobilfunk-Kommunikationsnetzwerk durch mehrfache, von mindestens einem Funknetzwerk-Knoten (BSa6, BSa9, BSa7) bediente Funkzellenschichten strukturiert ist und die mindestens eine Verbindung, die in einer der Funkzellenschichten eingerichtet ist, von Funkressourcen von einer anderen Funkzellenschicht unterstützt ist.

2. Verfahren nach Anspruch 1, wobei die Multicast-Kommunikation Multimedia-Rundfunk-Multicast-Dienste bereitstellt.

3. Verfahren nach Anspruch 1 oder 2, wobei die Information betreffend Multicast-Kommunikation ferner Personenruf-Information und/oder Nutzer-Zählinformation und/oder Multicast-Service-Angaben umfasst.

4. Verfahren nach einem der Ansprüche 1 bis 3, wobei die mindestens eine Verbindung durch Funkressourcen von mindestens einer benachbarten, Unicast-Kommunikation bereitstellenden und/oder Multicast-Kommunikation bereitstellenden Funkzelle unterstützt wird.

5. Verfahren nach Anspruch 4, wobei die Funkressourcen von mindestens einer benachbarten Funkzelle gewählt werden, in deren Richtung sich die Mobilstation bewegt.

6. Zweiter Funknetzwerk-Knoten (BSa9) für Funkkommunikation innerhalb eines Mobilfunk-Kommunikationsnetzwerks, aufweisend mindestens eine Mobilstation, die Information von mindestens einem ersten, Funkzellen (BSa6-N-h0, BSa6-SW-h0, BSa6-SE-h0) bedienenden Funknetzwerk-Knoten (BSa6) empfängt, der Multicast-Kommunikation bereitstellt, aufweisend:
Mittel zum Empfangen von Information betreffend Multicast-Kommunikation von der mindestens einen Mobilstation; und
Mittel zum Weiterleiten der Information an den mindestens einen ersten Funknetzwerk-Knoten (BSa6) über mindestens eine zwischen diesen eingerichtete Verbindung, wobei das Mobilfunk-Kommunikationsnetzwerk durch mehrfache, von mindestens einem Funknetzwerk-Knoten (BSa6, BSa9, BSa7) bediente Funkzellenschichten strukturiert ist und die mindestens eine Verbindung, die in einer der Funkzellenschichten eingerichtet ist, von Funkressourcen von einer anderen Funkzellenschicht unterstützt ist.

7. Erster Funknetzwerk-Knoten (BSa6) für Funkkommunikation innerhalb eines Mobilfunk-Kommunikationsnetzwerks, aufweisend mindestens eine Mobilstation und mindestens einen zweiten Funknetzwerk-Knoten (BSa9), der Funkzellen (BSa9-NE-h1) bedient und der Unicast-Kommunikation bereitstellt, aufweisend:
Mittel zum Empfangen von Information betreffend Multicast-Kommunikation vom mindestens einen zweiten Funknetzwerk-Knoten (BSa9) über mindestens eine zwischen diesen eingerichtete Verbindung, wobei das Mobilfunk-Kommunikationsnetzwerk durch mehrfache, von mindestens einem Funknetzwerk-Knoten (BSa6, BSa9, BSa7) bediente Funkzellenschichten strukturiert ist und die mindestens eine in einer der Funkzellenschichten eingerichtete Verbindung von Funkressourcen von einer anderen Funkzellenschicht unterstützt ist.

8. Erster Funknetzwerk-Knoten nach Anspruch 7 oder zweiter Funknetzwerk-Knoten nach Anspruch 6, wobei Multicast-Kommunikation Multimedia-Rundfunk-Multicast-Dienste bereitstellt.

9. Erster Funknetzwerk-Knoten nach Anspruch 7 oder 8, oder zweiter Funknetzwerk-Knoten nach Anspruch 6 oder 8, wobei die Information betreffend Multicast-Kommunikation ferner Personenruf-Information und/oder Nutzer-Zählinformation und/oder Multicast-Service-Angaben umfasst.

10. Erster Funknetzwerk-Knoten nach einem der Ansprüche 7 bis 9, oder zweiter Funknetzwerk-Knoten nach einem der Ansprüche 6, 8 oder 9, wobei die mindestens eine Verbindung durch Funkressourcen von mindestens einer benachbarten, Unicast-Kommunikation bereitstellenden und/oder Multicast-Kommunikation bereitstellenden Funkzelle unterstützt ist.

11. Erster oder zweiter Funknetzwerk-Knoten nach Anspruch 10, wobei die Funkressourcen von der mindestens einen benachbarten Funkzelle gewählt werden, in deren Richtung sich eine Mobilstation bewegt.

12. Verfahren nach einem der Ansprüche 1 bis 5, oder erster Funknetzwerk-Knoten nach einem der Ansprüche 7 bis 11 oder zweiter Funknetzwerk-Knoten nach einem der Ansprüche 6 oder 8 bis 11, wobei die beanspruchte Erfindung zum Synchronisieren von Funkkommunikation innerhalb eines Mobilfunk-Kommunikationsnetzwerks vorgesehen ist.

13. Erster Funknetzwerk-Knoten nach einem der Ansprüche 7 bis 12, oder zweiter Funknetzwerk-Knoten nach einem der Ansprüche 6 oder 8 bis 12, wobei der erste und/oder der zweite Funknetzwerk-Knoten eine Basisstation oder einen NodeB umfasst.

14. Funkkommunikationsnetzwerk, aufweisend mindestens einen zweiten Funknetzwerk-Knoten nach einem der Ansprüche 6 oder 8 bis 13 und mindestens einen ersten Funknetzwerk-Knoten nach einem der Ansprüche 7 bis 13.

## Revendications

1. Procédé pour des radiocommunications dans un réseau de radiocommunications avec des mobiles, comprenant :
la réception, par au moins une station mobile, d'informations provenant d'au moins un premier noeud de réseau radio (BSa6) servant des cellules radio (Bsa6-N-h0, Bsa6-SW-h0, Bsa6-SE-h0) fournissant une communication en multidiffusion; et
la communication de l'au moins une station mobile avec au moins un second noeud de réseau radio (Bsa9) servant des cellules radio (Bsa9-NE-h1) fournissant une communication en monodiffusion; et
la transmission d'informations concernant une communication en multidiffusion, depuis l'au moins une station mobile jusqu'à l'au moins un second noeud de réseau radio et jusqu'à l'au moins un premier noeud de réseau radio, via au moins une connexion établie entre ledit premier et ledit second noeud de réseau radio, et
dans lequel le réseau de radiocommunications avec des mobiles est structuré par de multiples couches de cellules radio servies par au moins un noeud de réseau radio (BSa6, Bsa9, Bsa7), et ladite au moins une connexion établie dans n'importe laquelle desdites couches de cellules radio est supportée par des ressources radio de n'importe quelle autre couche de cellules radio.

2. Procédé selon la revendication 1, dans lequel une communication en multidiffusion fournit des services de multidiffusion et de diffusion générale multimédia.

3. Procédé selon la revendication 1 ou 2, dans lequel ladite information concernant une communication en multidiffusion comprend en outre une information de pagination et/ou une information de compte utilisateur et/ou une indication de service de multidiffusion.

4. Procédé selon l'une quelconque des revendications 1 à 3, dans lequel l'au moins une connexion est supportée par des ressources radio provenant d'au moins une cellule radio voisine fournissant une communication en monodiffusion et/ou fournissant une communication en multidiffusion.

5. Procédé selon la revendication 4, dans lequel sont choisies lesdites ressources radio provenant d'au moins une cellule radio voisine vers laquelle se déplace ladite station mobile.

6. Second noeud de réseau radio (BSa9) pour des radiocommunications dans un réseau de radiocommunications avec des mobiles comprenant au moins une station mobile recevant des informations provenant d'au moins un premier noeud de réseau radio (BSa6) servant des cellules radio (Bsa6-N-h0, Bsa6-SW-h0, Bsa6-SE-h0) fournissant une communication en multidiffusion, comprenant
des moyens pour recevoir des informations concernant une communication en multidiffusion et provenant de l'au moins une station mobile; et
des moyens pour faire suivre les informations jusqu'à l'au moins un premier noeud de réseau radio (Bsa6), via au moins une connexion établie entre eux, où le réseau de radiocommunications avec des mobiles est structuré par de multiples couches de cellules radio servies par au moins un noeud de réseau radio (BSa6, Bsa9, Bsa7), et ladite au moins une connexion établie dans n'importe laquelle desdites couches de cellules radio est supportée par des ressources radio de n'importe quelle autre couche de cellules radio.

7. Premier noeud de réseau radio (BSa6) pour des radiocommunications dans un réseau de radiocommunications avec des mobiles comprenant au moins une station mobile et au moins un second noeud de réseau radio (BSa9) servant des cellules radio (Bsa9-NE-h1) fournissant une communication en monodiffusion, comprenant
des moyens pour recevoir des informations concernant une communication en multidiffusion et provenant de l'au moins un second noeud de réseau radio (Bsa9), via au moins une connexion établie entre eux, où le réseau de radiocommunications avec des mobiles est structuré par de multiples couches de cellules radio servies par au moins un noeud de réseau radio (BSa6, Bsa9, Bsa7), et ladite au moins une connexion établie dans n'importe laquelle desdites couches de cellules radio est supportée par des ressources radio de n'importe quelle autre couche de cellules radio.

8. Premier noeud de réseau radio selon la revendication 7 ou second noeud de réseau radio selon la revendication 6, dans lequel une communication en multidiffusion fournit des services de multidiffusion et de diffusion générale multimédia.

9. Premier noeud de réseau radio selon la revendication 7 ou 8, ou second noeud de réseau radio selon la revendication 6 ou 8, dans lequel lesdites informations concernant une communication en multidiffusion comprennent en outre une information de pagination et/ou une information de compte utilisateur et/ou une indication de service de multidiffusion.

10. Premier noeud de réseau radio selon l'une quelconque des revendications 7 à 9, ou second noeud de réseau radio selon l'une quelconque des revendications 6, 8 ou 9, dans lequel l'au moins une connexion est supportée par des ressources radio provenant d'au moins une cellule radio voisine fournissant une communication en monodiffusion et/ou fournissant une communication en multidiffusion.

11. Premier ou second noeud de réseau radio selon la revendication 10, dans lequel sont choisies lesdites ressources radio provenant de l'au moins une cellule radio voisine vers laquelle se déplace une station mobile.

12. Procédé selon l'une quelconque des revendications 1 à 5, ou premier noeud de réseau radio selon l'une quelconque des revendications 7 à 11, ou second noeud de réseau radio selon l'une quelconque des revendications 6 ou 8 à 11, dans lequel l'invention est revendiquée pour la synchronisation de radiocommunications dans un réseau de radiocommunications avec des mobiles.

13. Premier noeud de réseau radio selon l'une quelconque des revendications 7 à 12, ou second noeud de réseau radio selon l'une quelconque des revendications 6 ou 8 à 12, dans lequel le premier et/ou le second noeud de réseau radio comprend une station de base ou un Node B.

14. Réseau de radiocommunications comprenant au moins un second noeud de réseau radio selon l'une quelconque des revendications 6 ou 8 à 13 et au moins un premier noeud de réseau radio selon l'une quelconque des revendications 7 à 13.
